Europäisches Patentamt

(19) European Patent Office

Office européen des brevets

(11) Publication number : **0 514 307 A2**

(12) **EUROPEAN PATENT APPLICATION**

(21) Application number : 92480057.6

(22) Date of filing : 07.04.92

(51) Int. Cl.⁵ : **G06F 3/033**

(30) Priority : **17.05.91 US 703434**

(43) Date of publication of application :
**19.11.92 Bulletin 92/47**

(84) Designated Contracting States :
**DE FR GB**

(71) Applicant : **International Business Machines Corporation**
**Old Orchard Road**
**Armonk, N.Y. 10504 (US)**

(72) Inventor : **Gibson, David Chester**
**201 Quorum Drive**
**Trophy club, TX 76262 (US)**
Inventor : **Jefferson, Kendall Jay**
**1212 King Drive**
**Bedford, TX 76022 (US)**
Inventor : **Lock, Kendall Allen**
**1404 Esters 3010**
**Irving, TX 76061 (US)**
Inventor : **Schell, David J.**
**30 Salida Drive**
**Trophy Club, TX 76262 (US)**

(74) Representative : **de Pena, Alain**
**Compagnie IBM France Département de Propriété Intellectuelle**
**F-06610 La Gaude (FR)**

(54) **Method and apparatus for selectively revealing obscured portions of a viewport during graphic user interface drag and drop operations.**

(57)    A method and apparatus is disclosed for manipulating selectable visual icons in a data processing system. The data processing system has a plurality of software objects which are simultaneously displayed in a plurality of viewports, which at least partially overlap. The method and apparatus allow for graphically selecting a particular one of the selectable visual icons within a first of the plurality of viewports. The method and apparatus allow relocation of particular one of the selectable visual icons to an exposed portion of a second viewport of the plurality of viewports. The movement between viewports triggers an automatic rearranging of the order in which the plurality of viewports overlap, causing the second of the plurality of viewports to be raised to a topmost position relative to all others of the plurality of viewports. An override function is provided which inhibits automatic rearranging when the selected visual icon is passed through intervening viewports between a source viewport and a target viewport.

Fig. 7

The present invention relates generally to graphic user interfaces in computer systems, and specifically to "drag and drop" operations in a computer system capable of displaying multiple applications in a plurality of viewports or windows.

A relatively recent advance in the computer arts allows a computer user to simultaneously access, display, and manipulate data from a variety of related and/or unrelated computer application programs. This task is generally referred to as "multi-tasking." In a true multi-tasking system, several application programs are active simultaneously. Multi-tasking has been simulated on some of the less powerful personal computers in that only one application is in fact active at any one time, but the user interface presents the effective appearance of multi-tasking.

Activity relating to each application, whether in true or simulated multi-tasking, is generally displayed in a viewport. These viewports may overlap and partially or completely obscure each other and the data therein, or may be presented in a visually discrete, non-overlapping manner.

Many user interfaces include a plurality of selectable visual icons representative of software objects, including documents, files, images, as well as software operations such as printing, shredding, filing, or more sophisticated operations involving word, image, or numeric processing. In fact, very nearly any software document or software operation can be visually represented by a selectable visual icon.

A "drag and drop" operation is a user-controllable function accomplished on the computer with a graphic pointing device such as a cursor, light pen, mouse, or pointer. The computer user can use a mouse, or a spin button (or similar control mechanisms) to move a visual indicator, such as mouse arrow, within the planar surface of the computer's visual display.

A visual indicator usually includes the capability of attaching and detaching to selectable visual icons in response to user commands. These functions are well known in the prior art. Once a visual indicator is attached to a particular one of a plurality of selectable visual icons, the user may use the mouse, spin button, or similar mechanism to reposition the selected visual icon in another location within the visual display of the computer. Once the visual indicator is positioned at a desired location within a selected one of a plurality of viewports, the user provides a command to detach the selected visual icon from the visual indicator. For example, the computer user may "click" the mouse in a conventional fashion to attach and detach selectable visual icons.

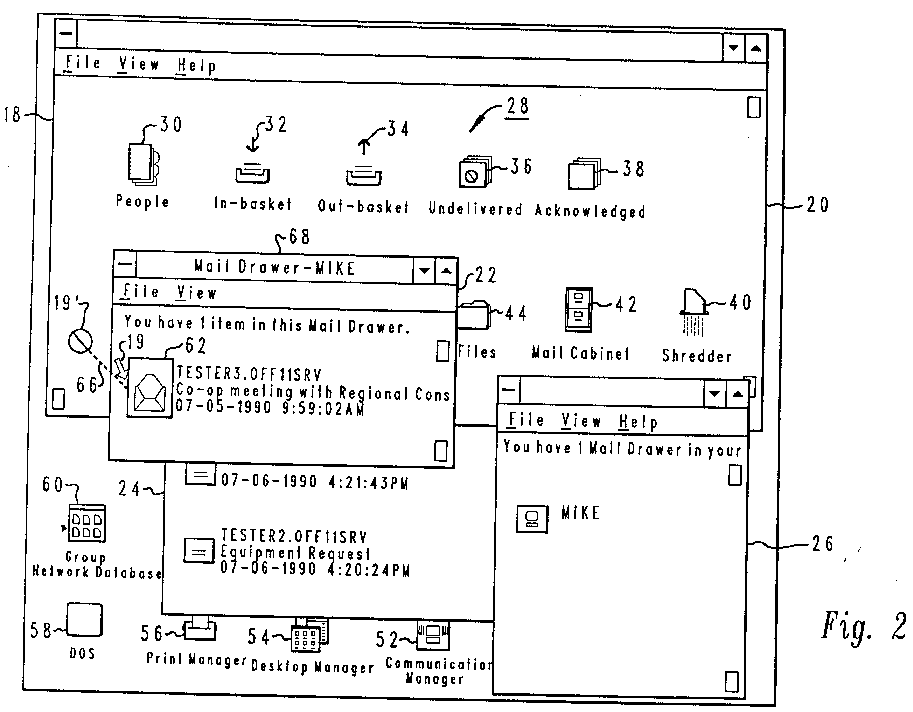

Frequently, the purpose of a "drag and drop" operation is to bring one selectable visual icon, which is representative of computer data or functions, into contact with another selected visual icon, which is also representative of either computer data or functions. For example, a user may desire to bring a "shredder" icon into a viewport to destroy a document which is either actually displayed within the viewport or displayed within the viewport in iconographic form by a representative visual icon. For an alternate example, a computer user may desire a hard copy of an electronic message or document. In this event, the user attaches a visual indicator to a particular visual icon representative of the document, and physically maneuvers that visual icon across the visual display to a visual icon representative of a print function. Numerous other functions are possible, including those functions depicted in iconic graphic form in Figures 2 through 6.

In theory, the "drag and drop" operation is an efficient and intuitive means for users to interact with software interfaces. In practice, however, it is seldom used. The primary obstacle to its use is the requirement that both subject and target objects (that is, both visual icons) be readily visible and not hidden from view by overlapping viewports. In multi-viewport environments (which typically enable "drag and drop" operations), the subject and target objects are rarely visible at the same time. The user must therefore painstakingly resize and rearrange most of the open windows to simultaneously expose both subject and target objects prior to initiating the "drag and drop" operations. The resizing and rearranging of viewports requires so much additional time and effort that users typically opt to perform the desired action via more conventional interaction techniques, such as pull-down menus.

In addition to the problems set forth above with regard to the possibility that subject and target objects may not be readily visible, an additional problem is brought about due to the manner in which multi-tasking operations operate. Typically, only one viewport or window of the many windows which may be displayed within a data processing system receives the "focus." That is, a window which receives the input from a mouse pointer, keyboard, or other user input device. A window which gains "focus" becomes the topmost window. Those skilled in the art will appreciate that a window may receive focus when switched to the upmost position by a keyboard "hot-key" or when the window is clicked on with a mouse or other pointing device. This further complicates the utility of the drag and drop operation due to the fact that a visual icon within an overlapped window may be visible and when selected will cause the window displaying that icon to receive the focus. That is, the window containing the source icon may, be elevated to the topmost position thereby overlapping a target visual icon which was previously visible. Thus, even in situations in which both the source and target icon are visible if the source icon is located within an overlapped viewport, the selection of that icon may render the target icon hidden by the elevation of the window which contains the source icon.

Thus, it should be apparent that a need exists for a method and apparatus whereby source icons and target icons may be readily accessed within a multitasking system despite the fact that one or more icons may be temporarily obscured by an overlapping window. It is one objective of the present invention to allow users to expose and select subject and target objects during a "drag and drop" operation.

It is another objective of the present invention to provide an automated software mechanism for automatically exposing certain obscured visual icons during a drag and drop operation.

It is still another objective of the present invention to provide a data processing program product which facilitates drag and drop operations which are performable on selectable icons disposed in a visual display of a data processing system which includes a plurality of viewports which at least partially overlap. The program product includes instructions which monitor and detect the movement of a visual indicator from a source viewport to a target viewport, and instructions which automatically rearrange the plurality of viewports to raise the target viewport to a topmost position relative to all other viewports, thereby exposing previously obscured visual icons.

It is yet another objective of the present invention to provide a data processing program product which facilitates drag and drop operations performable on selectable icons disposed on a visual display of a data processing system which includes a plurality of viewports which at least partially overlap. The program product includes programmed instructions which allow the user to temporarily prevent the automatic rearrangement of the overlapping viewports in order to maintain the viewports in a particular stacked configuration.

These and other objectives are achieved as is now described. A method is provided for facilitating drag and drop manipulation of selectable visual icons in a data processing system having a planar visual display for receiving a plurality of viewports which at least partially overlap and which obscure certain of said selectable visual icons. The data processing system includes a visual indicator which is positionable within the planar visual display, and which is adapted for selectively attaching and detaching to selectable visual icons. The visual indicator serves to selectively reposition selectable visual icons within the planar visual display. The proximal placement of a plurality of selectable visual icons then actuates particular software operations. The method comprises a number of steps performed by the data processing system.

First, a particular one of the selectable visual icons is graphically selected within a first of the plurality of viewports utilizing the visual indicator. The selected visual icon is attached to the visual indicator, and moved with the visual indicator within the planar visual display to an exposed portion of a second viewport of the plurality of viewports, which contains at least one selectable visual icon which is obscured by an overlapping viewport. The data processing system monitors for movement of the visual indicator between viewports of the plurality of viewports. When movement between viewports is detected, the data processing system automatically rearranges the order in which the plurality of viewports overlap to raise the viewport which receives the visual indicator to a topmost position relative to all others of the plurality of viewports.

An override function is also provided which allows the user to command the data processing system to override the step of automatically rearranging the plurality of viewports. This prevents rearrangement of the order in which the plurality of viewports overlap, preventing automatic rearrangement when the visual indicator is passed between intermediate viewports between a source viewport and a target viewport. This feature prevents undesired rearrangement, and is particularly useful when the target viewport is nested within one or more other viewports.

The novel features believed characteristic of the invention are set forth in the appended claims. The invention itself, however, as well as a preferred mode of use, further objects and advantages thereof, will best be understood by reference to the following detailed description of an illustrative embodiment when read in conjunction with the accompanying drawings, wherein:

Figure 1 is a depiction of a data processing system which may be utilized to implement the method and apparatus of the present invention;

Figures 2 through 4 are pictorial representations of a plurality of overlapping viewports within a computer display screen which depict a progression of steps of the improved drag and drop operation of the present invention applied to visual icons representative of software objects;

Figures 5 and 6 are pictorial representations of a plurality of overlapping viewports within a computer display screen (different from those depicted in Figures 2 through 4) which illustrate an override function of the improved drag and drop operations of the present invention; and

Figure 7 is a flowchart representative of the computer operations which constitute the improved drag and drop operation of the present invention.

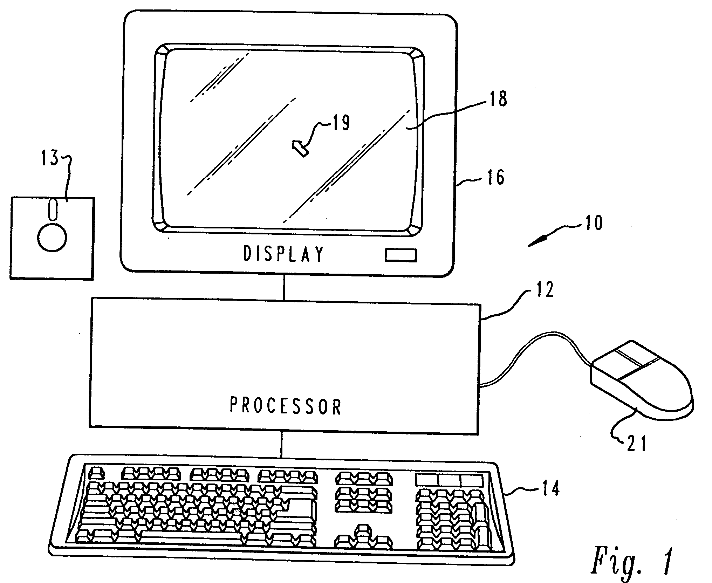

With reference now to the figures and in particular with reference to Figure 1, there is depicted a pictorial representation of a data processing system 10 which may be utilized to implement the method and apparatus of the present invention. As is illustrated, data-processing system 10 includes a processor 12 (with an internal central processing unit, read only memory, and random access memory, which are not depicted) which is coupled to keyboard 14 and display device 16 in a manner well known in the art. Display device 16 includes a display screen 18. Processor 12 is adapted to receive removable memory media 13 to receive application and other software as well as data. Those skilled in the art will appreciate that data processing system 10 may be implemented by utilizing any suitable computer including the so-called "personal computer" or a workstation coupled to a mainframe host computer. One example of a data processing system which may be utilized to implement the method and apparatus of the presen t invention is the International Business Machines Corporation personal computer PS/2.

As is illustrated in Figure 1, window 12 includes a visual indicator 19, such as a cursor or mouse pointer, which is utilized in a manner well known in the art to indicate a selected position upon computer display screen 18. That position is illustrated and may be utilized to indicate the location at which data may be input by the user in accordance with known computer input techniques. Of course, cursor or mouse pointer 19 may be moved about on computer display screen 10 by utilizing a cursor key pad, a mouse input device 21, or standard keyboard inputs.

With reference now to Figures 2 through 4, there are depicted a plurality of overlapping viewports within a computer display screen. The steps which depict the steps comprising the improved drop and drag operation of the present invention are illustrated by the progression of Figures 2 through 4, which differ slightly from one another.

With reference to Figure 2, computer visual display screen 18 includes a plurality of viewports, including viewport 20, 22, 24, and 26. Those skilled in the art of multi-tasking computer applications will appreciate that each viewport may represent a single computer application program such as a spreadsheet program, a word processing application, or a graphics application. Typically, viewports 20, 22, 24, and 26 may be displayed in an overlapping sequence which is generally dependent upon the order in which the applications or work areas were opened or called. With reference to Figure 2, viewport 24 was opened first, followed by viewport 20 which partially overlaps viewport 24. Then, viewports 22, 26 were opened, and each partially overlap viewports 22, 24.

Those skilled in the art will appreciate that even while overlapped as depicted, the non-visible contents of each viewport are present in memory and are restored to the display of computer visual display screen 18 upon the rearrangement of viewports 20, 22, 24, and 26, as necessary, as can be seen by comparison of the figures.

As shown in Figure 2, viewports 20, 22, 24, and 26 include a number of selectable visual icons 28, which are representative of software objects. As used herein, the term "software objects" comprehends anything to which access is controlled within a computer system, for example and without limitation, a file, a program, an area of main storage, application software, documents, or images. In short, a "software object" comprehends a collection of data referred to by a single name and can include data such as images, or text, or operations and applications which are embodied as application software.

As shown in Figures 2 through 4, selectable visual icons 28 are provided and include: people icon 30, in-basket icon 32, out-basket icon 34, undelivered icon 36, acknowledged icon 38, shredder icon 40, mail cabinet icon 42, files icon 44, writing pad icon 46, telephone icon 48, printer icon 50 communications manager icon 52, desktop manager icon 54, print manager icon 56, DOS icon 58, group network icon 60, and mail drawer icon 62. Each of selectable visual icons 28 represent a software object. For example, people icon 30 is representative of a software application adapted for maintaining addresses and telephones in a prearranged order, similar to an address book or Rolodex system. For an alternative example, shredder icon 40 represents a software function which can be applied to documents, images, or data to destroy a selected file. For another example, printer icon 50 is representative of application software which controls the operation of a printer which is connected to data processing system 10. The icons represented in Figures 2 through 4 are merely representative of certain types of icons which are provided in a number of prior art software packages which include a graphic user interface, and are provided merely as examples, and are not intended to limit the scope of the present invention to any particular set of selectable visual icons.

Selectable visual icons 28 provide a "tokenized" or miniature representation of individual software objects. Icons 28 which are displayed within a viewport are available for use within that particular viewport. Icons 28 may be used by another independent software application by movement of the icon from one viewport to another viewport through visual indicator 19 in cooperation with programming interfaces.

In the industry, the term "source" application is used to describe a program providing the function represented by an icon, and the term "client" application is used to describe the application providing the viewport which displays the icon. Therefore, the application software which provides the function which is visually represented by an icon is frequently completely independent of the application software which displays the icon in a viewport. A direct manipulation protocol is used by OS/2 Presentation Manager software packages to coordinate the operation of both source and client applications during a drag and drop operation. Additionally, a protocol known as Dynamic Data Exchange (DDE) may also be utilized for interprocess communication and consists of a small set of messages and data structures designed to support the interaction between the processes after an icon has been relocated. The communications model utilized by DDE is based on a client/source application relationship wherein the client a pplication initializes a conversation with the appropriate source application and the data then flows from the source application to the client application, supporting the icon disposed therein. For a more detailed description of DDE see Microsoft Systems Journal, November 1987, page 13.

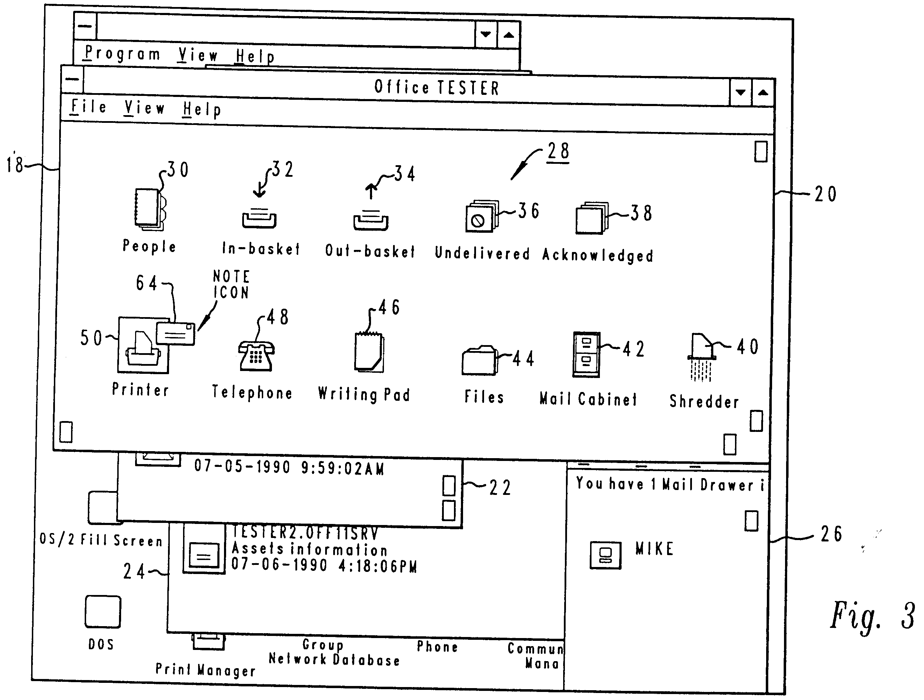

Figures 2 through 4 are arranged in time-order sequence to depict an improved drag and drop operation on a particular selectable visual icon 28. Beginning in Figure 2, the operator's mail drawer contains a note. The mail drawer is visually represented in viewport 22 by mail drawer icon 62. A mail drawer is a memory location allocated for receipt of "mail," which usually consists of electronic messages conveyed through modems or electronic messages conveyed through hardwiring in a local area network. The note contained within the mail drawer is visually represented by note icon 64 (in Figure 3).

Assume for purposes of discussion that the computer operator desires to print the note contained in mail drawer viewport 22. One easy way to accomplish this task is to position visual indicator 19 (which in the disclosed embodiment comprises a mouse pointer 19) within viewport 22, and attach note icon 64 to visual indicator 19 by actuation of mouse input device 21. Then, mouse input device 21 can be used to relocate note icon 64 within display screen 18 of data processing system 10. Preferably, in order to print the note contained in the mail drawer viewport 22, the note icon 64 (of Figure 3) is detached from visual indicator 19 in proximity to printer icon 50, and preferably in at least partial overlapping relationship with printer icon 50.

However, as shown in Figure 2, printer icon 50 is obscured from view within display screen 18 of data processing system 10 by the mail drawer viewport 22, rendering a drop and drag and operation impossible, without repositioning or reshaping of mail drawer 22 to reveal printer icon 50. As stated above in the description of the prior art, this problem is frequently encountered, rendering most drag and drop operations impractical in a display screen 18 which is crowded with viewports.

The present invention overcomes this problem of prior art graphic interface systems by continually monitoring for movement of visual indicator 19 between viewports, and then automatically rearranging the order in which the viewports are stacked if movement between viewports is detected.

For example, with reference again to Figures 2 through 4, data processing system 10 monitors to detect movement of visual indicator 19 from viewport 22. Dashed line 66 in Figure 2 is representative of the movement of visual indicator 19 across outer boundary 68 of mail drawer viewport 22. In accordance with established direct manipulation protocols, visual indicator 19 visually changes from note icon 64 which visually represents a mail drawer file to the icon shown as 19′ in Figure 2, to indicate to the computer operator that a manipulation operation is required to drag and drop note icon 64 into viewport 20.

In the present invention, when data processing system 10 detects the relocation of note icon 64 across outer boundary 68 of viewport 22, viewport 20 is automatically relocated with.in the stack of overlapping viewports to a topmost position. When this occurs, the icons which were previously obscured from view by viewport 22 (specifically writing pad icon 46, telephone icon 48, and printer icon 50) are now rendered invisible to the computer operator.

Simultaneous with the rearrangement of viewports, an interprocess protocol reestablishes communication between the source application and the client application, causing visual indicator 19 to change from visual indicator 19′, as shown in Figure 2, to note icon 64, which is representative of a message which is taken from the mail drawer, as represented by mail drawer icon 62. As discussed above, positioning of note icon 64 upon printer icon 50 causes the document or message which is represented by note icon 64 to be printed on a printer which is visually represented by printer icon 50.

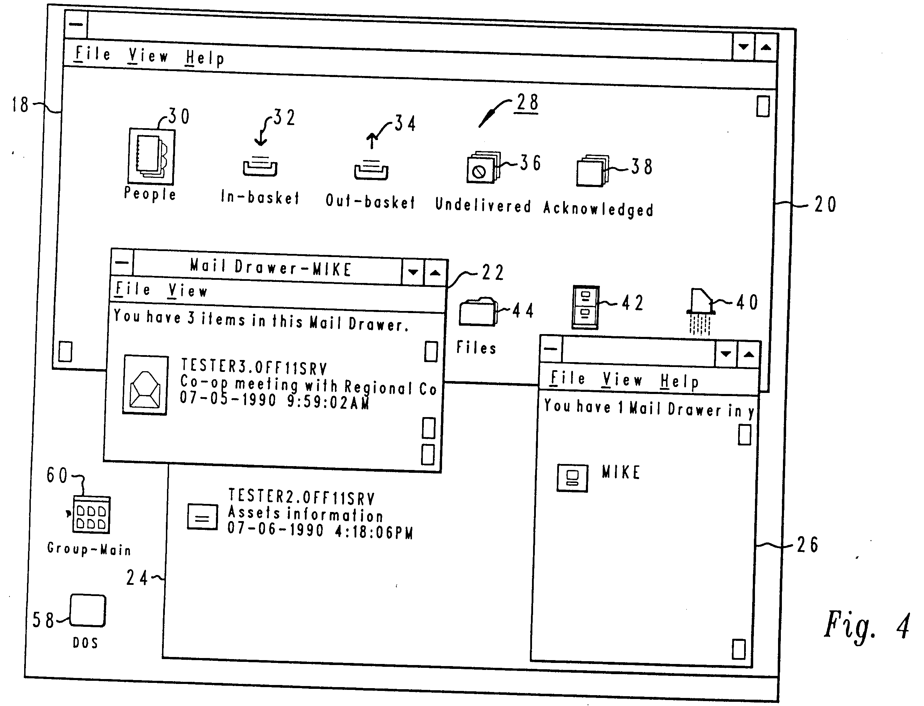

With reference now to Figure 4, once the operation visually represented by the proximal placement of note icon 64 and printer icon 50 is executed (in this case, once the message represented by note icon 64 is printed on a printer represented by printer icon 50) the plurality of partially overlapping viewports 20, 22, 24, and 26 are returned to an arrangement identical to that of the stack prior to relocation of note icon 64 from viewport 22 to viewport 20.

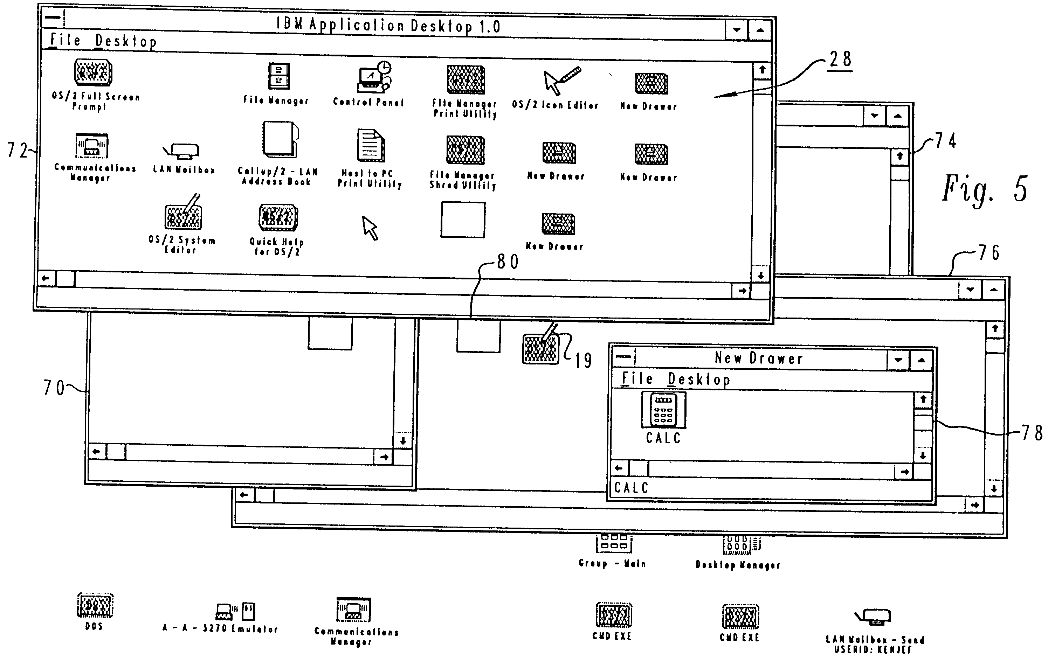

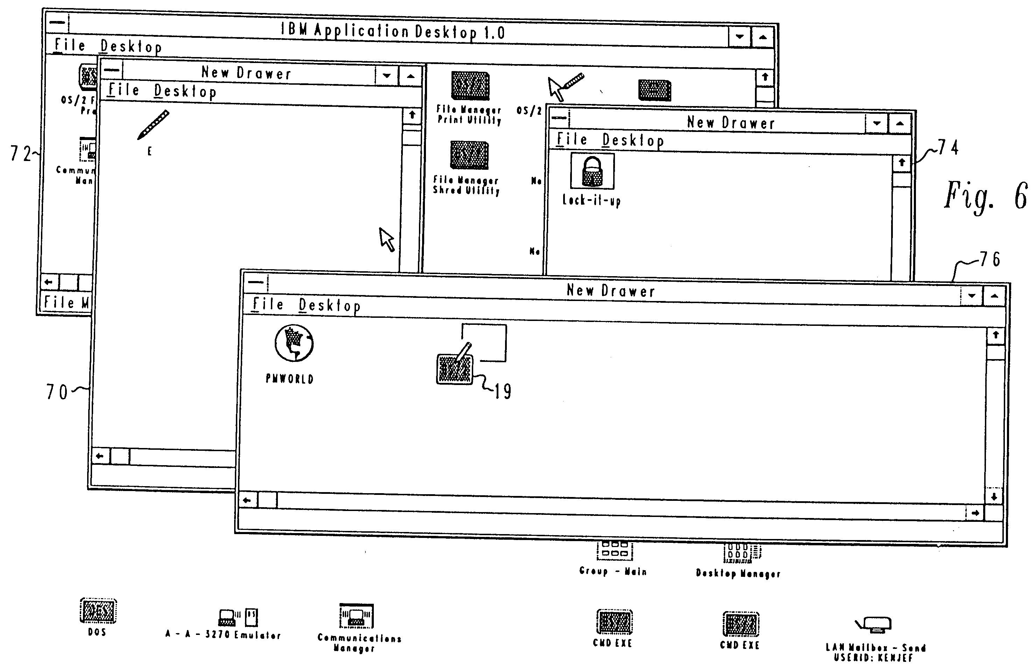

Figures 5 and 6 graphically depict an override feature of the drag and drop facilitator of the present invention which prevents the automatic rearrangement of the order of the plurality of viewports in response to movement of visual indicator 19 between viewports. In the preferred embodiment, the override function is actuated upon receipt of a user command. Preferably, the command can be provided by actuation of a dedicated key on keyboard 14 of data processing system 10. In operation, the user makes a determination that it would be inappropriate or confusing to rearrange the order of the stack of partially overlapping viewports, and consequently depresses a dedicated key on keyboard 14 which prevents the automatic reordering of viewports as a result of passage of visual indicator 19 between viewports.

As shown in Figure 5, viewports 70, 72, 74, 76, and 78 are arranged in overlapping relationship within display screen 18 of data processing system 10. A plurality of selectable visual icons 28 are provided in several of the viewports. These visual icons differ from those depicted in Figures 2 through 4, and represent still other types of useful visual icons. As shown in Figure 5, visual indicator 19 is moved between viewport 72 and viewport 76. In the present invention, viewport 76 is automatically repositioned within the stack of partially overlapping viewports in response to detected crossing of boundary 80 of viewport 72 by visual indicator 19.

Figure 6 graphically depicts the consequence of elevating viewport 76 within the stack of viewports. As shown, viewport 78, which was nested entirely within viewport 76, is now entirely obscured from view by viewport 76. The override function of the present invention provides an efficient means for preventing the unneeded or unwanted rearrangement of the order of the stack of partially overlapping viewports. As shown in Figure 5, when the override operation is selected by the computer user, visual indicator 19 may be relocated from viewport 72 to viewport 76 without any consequential rearrangement of the order of the overlapping viewports. This override function facilitates the location of visual indicator 19 from a source viewport, such as viewport 72, to a target viewport, such as viewport 78, which are separated by intervening viewports.

In operation, as visual indicator 19 is moved toward boundary 80, the operator depresses a dedicated key on keyboard 14, actuating the override feature of the present invention just prior to passage of visual indicator 19 across boundary 80. The dedicated key on keyboard 14 is maintained in a depressed condition until visual indicator 19 is relocated within the boundaries of target viewport 78.

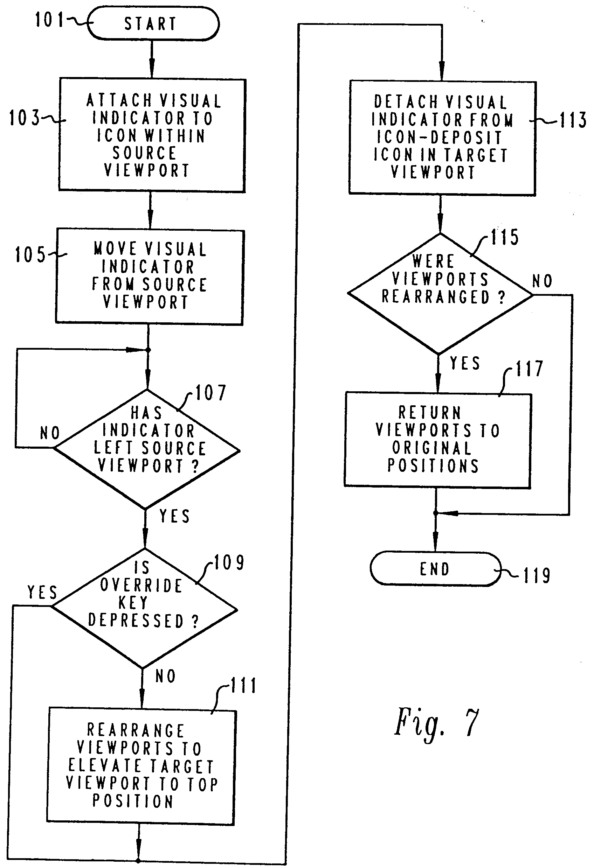

Figures 7 is a flowchart representation of computer instructions, user commands, and computer operations which constitute the improved drag and drop operation of the present invention. The process begins with block 101. Block 103 depicts the computer operator's selection of a visual icon by means of the visual indicator within a source viewport. Ordinarily, the process of selection of a visual icon is accomplished by "clicking" a mouse pointer device when the mouse pointer is placed upon the selected visual icon.

Block 105 is representative of the computer operator's actuation of the visual indicator by known means, such as a mouse input device, to move the visual indicator, with attached selected visual icon, from the source viewport. Decision block 107 is representative of a data processing device's continual monitoring of the position of the visual indicator relative to the source viewport. If the visual indicator has not left the source viewport, as determined in step 107, the data processing system continues monitoring. If, however, the visual indicator has been determined, in step 107, to have left the source viewport, the process continues in decision block 109. Decision block 109 is representative of a determination by the data processing system if a dedicated override key has been depressed. If it is determined in step 109 that the override key has been depressed, the process continues with decision block 113; however, if it is determined in decision block 109 that the override key has not been depres sed, the process continues in the step represented by operation block 111.

Operation block 111 is representative of the operation of the data processing system to automatically rearrange the viewport configuration to elevate the viewport which receives the visual indicator to the topmost position within the stack of at least partially overlapping viewports.

Operation block 113 is representative of the user command to detach the selected visual icon from the visual indicator. Ordinarily, this is accomplished by "clicking" the mouse pointer device, but can be accomplished by other means, particularly when other visual indicator devices are employed.

The process continues with decision block 115 which is representative of the data processing system making a determination of whether the viewports were automatically rearranged in operation block 111. If it is determined in step 115 that no rearrangement occurred in operation block 111, the process continues with block 119. However, it is determined in decision block 115 that the viewports were indeed automatically rearranged in operation block 111, then the process continues with operation block 117.

Operation block 117 is representative of the data processing system's automatic return of the plurality of at least partially overlapping viewports to the pre-rearrangement positions, identical to the positions of the viewports prior to the relocation of the visual indicator, with attached selected visual icon, from the source viewport.

The process terminates at block 119, since the drag and drop operation of a selected visual icon from a source viewport to a target viewport has been accomplished, either with or without automatic rearrangement of intervening viewports, dependent upon particular user commands.

The present invention can be characterized as a data processing program product which facilitates drag and drop operations performable on selectable icons disposed on a visual display of a data processing system, wherein a plurality of viewports are provided which at least partially overlap. In such a characterization, the invention comprises a media on which is recorded a plurality of instructions which are executable by data processing system 10.

Instructions are provided which are responsive to an operator performed selection of a particular one of the selectable icons within a first of the plurality of viewports. These instructions operate to attach the particular one of the selectable icons to a visual indicator positionable within the visual display.

The media further includes instructions which are responsive to operator control for positioning the visual indicator within the visual display. These instructions allow movement of the visual indicator from a source viewport of the plurality of viewports to a target viewport of the plurality of viewports, with a particular one of the selectable icons attached thereto.

The media also includes instruction means for determining and detecting the passage of the visual indicator from the source viewport into the target viewport. Instructions are also provided for automatically rearranging the plurality of viewports when a relocation of the visual indicator between the source and target viewports is detected. The viewports are automatically rearranged to raise the target viewport to a topmost position relative to all others of the plurality of viewports.

The media may further include instructions which are responsive to an operator command for temporarily overriding the instruction means which ordinarily automatically rearrange the position of the viewports. These instructions maintain the target viewport in its position relative to all other viewports, in response to the operator command.

The media may also contain instructions which are responsive to the user command for detaching the particular one of the selectable icons from the visual indicator to deposit the particular one of the selectable icons in the target viewport.

Finally, the media may also include instructions for automatically returning the plurality of viewports to an arrangement identical to that of a plurality of viewports at a time prior to the operation of the instruction means for automatically rearranging the viewports.

The improved drag and drop operation of the present invention includes significant advantages over prior art drag and drop operations. First and foremost, the improved drag and drop operation of the present invention allows one to make full and complete use of the visual icons provided in a multi-viewport environment, notwithstanding the fact that in a crowded, visual display a number of visual icons may be obscured from view by overlapping viewports. The improved drop and drag operation of the present invention also allows the user to selectively override or repress the automatic rearrangement which occurs when a visual indicator is moved between two viewports of a plurality of at least partially overlapping viewports. This feature prevents unintended, unneeded, or confusing rearrangements which could frustrate the operator and inhibit the use of the visual icons. Finally, the preferred drag and drop operation of the present invention includes features for automatically returning the viewports to an ar rangement identical to that prior to the automatic rearrangement which may occur when a visual indicator is moved between viewports. Thus, the user is presented with a configuration of viewports which is identical to that encountered prior to commencement of the drag and drop operation. This automatic returning to the pre-drag-and-drop condition minimizes the possibility for confusion.

## Claims

1. A method of manipulating visual icons in a data processing system having a plurality of software objects which are simultaneously displayed in a plurality of viewports which at least partially overlap, comprising the method steps performed with said data processing system of:

    graphically selecting a particular one of said selectable visual icons within a first of said plurality of viewports;

    relocating said particular one of said selectable visual icons to an exposed portion of a second of said plurality of viewports; and

    automatically rearranging the order in which said plurality of viewports overlap in response to movement of said particular one of said selectable visual icons onto said exposed portion of said second of said plurality of viewports, such that said second of said plurality of viewports is raised to a topmost position relative to all others of said plurality of viewports.

2. A method of manipulating selectable visual icons according to Claim 1, further comprising:

    selectively preventing automatic rearrangement of said plurality of viewports notwithstanding relocation of said particular one of said selectable visual icons onto said exposed portion of said second of said plurality of viewports.

3. A method of manipulating selectable visual icons according to Claim 1, further comprising:

    delivering said particular one of said selectable visual icons to said second of said plurality of viewports.

4. A method of manipulating selectable visual icons according to Claim 1, further comprising:

    delivering said particular one of said selectable visual icons to said second of said plurality of viewports; and

    automatically returning said plurality of viewports to an arrangement identical to that of said plurality of viewports prior to said step of automatically rearranging.

5. In a computer system having a visual display and a graphical user interface including a plurality of selectable icons representative of software objects, a visual indicator for moving a selected one of said selectable icons within said visual display, and a plurality of viewports which at least partially overlap which are, arranged in a stack having a top position unobscured by other viewports, wherein at least one revealed icon is visible in a source viewport and at least one obscured icon is disposed in an obscured portion of a target viewport which is obscured from view by an overlapping window, a drag and drop function facilitator means, comprising:

means for determining when a particular one of said at least one revealed icon of said plurality of selectable icons is relocated with said visual indicator from said source viewport to said target viewport within said visual display; and

means for automatically moving said target viewport to said top position in said stack to reveal said previously obscured at least one obscured icon of said target viewport, responsive to said means for determining.

6. A drag and drop function facilitator means according to Claim 5, further comprising:

means for selectively preventing said means for automatically moving from moving said target viewport to said top position in said stack.

7. A drag and drop function facilitator means according to Claim 5, further comprising:

means for delivering said particular one of said at least one revealed icon of said plurality of selectable icons to said target viewport.

8. A drag and drop function facilitator means according to Claim 5, further comprising:

means for delivering said particular one of said at least one revealed icon of said plurality of selectable icons to said target viewport; and

means for automatically returning said plurality of viewports to an arrangement identical to that of said plurality of viewports of prior movement of said target viewport to said top position.

9. A method of facilitating a drag and drop manipulation of selectable visual icons in a data processing system having a planar visual display for displaying a plurality of viewports which at least partially overlap obscuring certain of said selectable visual icons, said data processing system also having a visual indicator positionable within said planar visual display which is adapted for selectively attaching and detaching to selectable visual icons for selectively positioning selectable visual icons within said planar visual display, wherein proximal placement of a plurality of selectable visual icons actuates a particular software operation, comprising the method steps performed by said data processing system of:

graphically selecting with said visual indicator a particular one of said selectable visual icon within a first of said plurality of viewports;

attaching said particular one of said selectable visual icons to said visual indicator;

relocating said particular one of said selectable visual icons with said visual indicator within said planar visual display to an exposed portion of a second of said plurality of viewports which contains at least one selectable visual icon obscured by an overlapping viewport;

monitoring for relocation of said visual indicator between ones of said plurality of viewports;

automatically rearranging the order in which said plurality of viewports overlap in response to relocation detected between ones of said plurality of viewports, such that a recipient viewport of said plurality of viewports which receives said visual indicator with said particular one of said selectable visual icons attached thereto is raised to a topmost position relative to all others of said plurality of viewports;

selectively overriding, upon receipt of a user command, said step of automatically rearranging to prevent rearrangement of the order in which said plurality of viewports overlap to accommodate passage through viewports of said plurality of viewports which are intermediate of said first of said plurality of viewports and second of said plurality of viewports;

wherein, upon relocation of said visual indicator with a particular one of said selectable visual icons attached thereto into said second of said plurality of viewports, said second of said plurality of viewports is automatically rearranged to said topmost position to reveal entirely said second of said plurality of viewports including said at least one selectable visual icon previously obscured by overlapping ones of said plurality of viewports.

10. A method of facilitating a drag and drop manipulation of selectable visual icons according to Claim 13, further comprising:

detaching said particular one of said selectable visual icons from said visual indicator to place said particular one of said selectable visual icons proximate a particular one of said at least one selectable visual icon previously obscured by an overlapping viewport, allowing actuation of said particular software function.

11. A method of facilitating a drag and drop manipulation of selectable visual icons according to Claim 13, further comprising:

detaching said particular one of said selectable visual icons from said visual indicator to place said particular one of said selectable visual icons proximate a particular one of said at least one selectable visual icon previously obscured by an overlapping viewport, allowing actuation of a particular software function;

automatically returning said visual indicator to said first of said plurality of viewports; and

simultaneously automatically returning said plurality of viewports to an arrangement identical to that of said plurality of viewports at time prior to said step of automatically rearranging.

DISPLAY

PROCESSOR

Fig. 1

*Fig. 2*

EP 0 514 307 A2

Fig. 3

Office TESTER

Program View Help

File View Help

People

In-basket   Out-basket   Undelivered   Acknowledged

Telephone   Writing Pad

Shredder

Files   Mail Cabinet

Printer

NOTE ICON

You have 1 Mail Drawer i

MIKE

TESTER2.OFF11SRV
Assets information
07-06-1990 4:18:06PM

07-05-1990 9:59:02AM

OS/2 Fill Screen

Print Manager

Group   Phone   Communi
Network Database   Mana

DOS

Fig. 4

EP 0 514 307 A2

**IBM Application Desktop 1.0**

File  Desktop

OS/2 Full Screen Prompt

File Manager

Control Panel

File Manager Print Utility

OS/2 Icon Editor

New Drawer

Communications Manager

LAN Mailbox

Callup/2 - LAN Address Book

Host to PC Print Utility

File Manager Shred Utility

New Drawer

New Drawer

OS/2 System Editor

Quick Help for OS/2

New Drawer

_28_

_74_

_72_

*Fig. 5*

_76_

_78_

_70_

_80_

_19_

**New Drawer**

File  Desktop

CALC

CALC

Group - Main

Desktop Manager

DOS

A - A - 3270 Emulator

Communications Manager

CMD EXE

CMD EXE

LAN Mailbox - Send USERID: KENJEF

14

Fig. 6

101 — START

103 — ATTACH VISUAL INDICATOR TO ICON WITHIN SOURCE VIEWPORT

105 — MOVE VISUAL INDICATOR FROM SOURCE VIEWPORT

107 — HAS INDICATOR LEFT SOURCE VIEWPORT ?

NO

YES

109 — IS OVERRIDE KEY DEPRESSED ?

YES

NO

111 — REARRANGE VIEWPORTS TO ELEVATE TARGET VIEWPORT TO TOP POSITION

113 — DETACH VISUAL INDICATOR FROM ICON-DEPOSIT ICON IN TARGET VIEWPORT

115 — WERE VIEWPORTS REARRANGED ?

NO

YES

117 — RETURN VIEWPORTS TO ORIGINAL POSITIONS

END — 119

*Fig. 7*